# EUROPÄISCHE PATENTANMELDUNG

(11) **EP 1 452 389 A2**
(43) Veröffentlichungstag der Anmeldung: **01.09.2004**
(21) Anmeldenummer: 04004306.9
(22) Anmeldetag: 26.02.2004
(51) Int. Cl.: B60Q 1/12, B60Q 1/06, B60Q 1/076, B60Q 1/10, B60Q 1/115

(54) **Scheinwerfer für Fahrzeuge**

(30) Priorität: 01.03.2003 DE 10308986
(71) Anmelder: Hella KG Hueck & Co., 59552 Lippstadt (DE)
(72) Erfinder: Korff, Detlef, 59557 Lippstadt (DE); Brummel, Reinhold, 59609 Anröchte (DE); Plotzitzka, Jörg, 59558 Lippstadt (DE); Knoche, Matthias, 59597 Erwitte (DE)

(57) **Zusammenfassung**

Die Erfindung betrifft einen Scheinwerfer für Fahrzeuge mit einem das Licht abstrahlenden Lichtmodul, das mittels einer Schwenkeinrichtung über einen vorgegebenen Schwenkwinkelbereich im Verhältnis zu einem Gehäuse schwenkbar angeordnet ist, wobei der Schwenkwinkelbereich mittels eines verstellbaren Anschlags einstellbar ist.

## Beschreibung

Die Erfindung betrifft einen Scheinwerfer für Fahrzeuge mit einem das Licht abstrahlenden Lichtmodul, das mittels einer Schwenkeinrichtung über einen vorgegebenen Schwenkwinkelbereich im Verhältnis zu einem Gehäuse schwenkbar angeordnet ist.

Aus der DE 198 02 023 A1 ist ein Scheinwerfer für Fahrzeuge mit einem Gehäuse bekannt, in dem ein Lichtmodul mittels einer Schwenkeinrichtung in einer horizontalen Schwenkebene verstellbar angeordnet ist. Die Schwenkeinrichtung weist ein lineares Stellglied auf, das über ein Kugelgelenk mit dem Lichtmodul gekoppelt ist und das Lichtmodul in eine vorgegebene Schwenkwinkelposition verbringt. Ein Anschlag zur Begrenzung des Schwenkwinkelbereiches ist nicht vorgesehen.

Aus der DE 196 48 180 A1 ist ein Scheinwerfer für Fahrzeuge bekannt, bei dem die Verstellung des Lichtmoduls in der Schwenkebene durch zwei Anschläge begrenzt ist. Der eine Anschlag dient dazu, das Lichtmodul nach dem Verschwenken wieder in die Normalposition zu positionieren. Der andere Anschlag dient zur Festlegung des maximalen Schwenkbereiches. Eine Verstellbarkeit der Anschläge ist nicht vorgesehen.

Aufgabe der vorliegenden Erfindung ist es, einen Scheinwerfer für Fahrzeuge derart weiterzubilden, dass ein vorgegebener Schwenkbereich des Lichtmoduls sicher begrenzt wird.

Zur Lösung dieser Aufgabe ist die Erfindung in Verbindung mit dem Oberbegriff des Patenanspruchs 1 dadurch gekennzeichnet, dass der Schwenkwinkelbereich mittels eines verstellbaren Anschlags einstellbar ist.

Der besondere Vorteil der Erfindung besteht darin, dass durch die Ausbildung eines verstellbaren Endanschlags ein vorgegebener Schwenkbereich des Lichtmoduls sicher und fest begrenzt werden kann. Ein Überschwenken des Lichtmoduls in Folge einer fehlerhaften Betätigung der Schwenkeinrichtung wird sicher vermieden. Darüber hinaus ist der Schwenkbereich variabel einstellbar, so dass in Abhängigkeit von dem Einsatzzweck der Schwenkbereich auf einfache Weise begrenzt werden kann. Eine Umkonfigurierung der Schwenkeinrichtung ist hierzu nicht erforderlich.

Nach einer bevorzugten Ausführungsform der Erfindung ist der Endanschlag als ein Schraubelement ausgebildet, das senkrecht zur Schwenkachse verlaufend in einer Anschlagbohrung verstellbar geführt ist. Der maximale Schwenkwinkel des Lichtmoduls wird dabei durch den Einschraubweg des Schraubelementes bestimmt. Dabei kann das Schraubelement manuell, mechanisch oder elektromechanisch verstellt werden. Vorteilhaft wird die Begrenzung des Schwenkbereiches unabhängig von der Betätigung der Schwenkeinrichtung eingestellt. Dies kann zum einen manuell vorzugsweise mittels eines Schraubwerkzeugs erfolgen, wobei eine entsprechende Skala an dem Schraubelement oder der Anschlagbohrung eine Korrespondenz schafft zu dem maximalen Schwenkwinkel. Nach einer alternativen Ausführungsform kann das Schraubelement auch mittels einer mechanischen oder elektromechanischen Betätigungseinrichtung verstellt werden, so dass die Einstellung des Endanschlags ortsfern vorgenommen werden kann.

Nach einer Weiterbildung der Erfindung erfolgt ein Verschwenken des Lichtmoduls um eine vertikale Verschwenkachse, wobei ausgehend eine die vertikale Schwenkachse enthaltenden vertikalen Längsmittelebene ein rechter Schwenkwinkelbereich und ein linker Schwenkwinkelbereich durch jeweils zugeordnete Endanschläge begrenzbar ausgebildet sind. Vorteilhaft können ausgehend von einer vertikalen Nullebene zwei Schwenkwinkelbereiche mit unterschiedlichen maximalen Schwenkwinkeln eingestellt werden.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine Draufsicht auf ein an einem Verstellrahmen des Gehäuses gelagerten Lichtmoduls,
- Figur 2: eine Seitenansicht des Lichtmoduls und
- Figur 3: einen Horizontalschnitt des Lichtmoduls in einem unteren Bereich entlang der Schnittlinie III-III.

Ein Scheinwerfer für Kraftfahrzeuge besteht im wesentlichen aus einem Lichtmodul 1, der mittels einer Schwenkeinrichtung 2 schwenkbar um eine vertikale Schwenkachse 3 eines Gehäuses 4 angeordnet ist. Das Lichtmodul 1 ist entlang einer horizontalen Schwenkachse, beispielsweise zur Bildung eines Kurvenlichtes, verstellbar angeordnet. Zur Bildung einer Leuchtweitenregelung kann das Lichtmodul 1 auch in einer vertikalen Schwenkebene um eine horizontale Schwenkachse verstellbar gelagert sein.

Das Lichtmodul 1 ist als Projektionsmodul ausgebildet, das einen ellipsoidförmigen Reflektor 5 aufweist, der in einem Scheitelbereich eine Öffnung aufweist zur Anordnung einer Lichtquelle, vorzugsweise zur Anordnung einer Gasentladungslampe. In Lichtabstrahlrichtung 6 vorne gelagert ist eine Linse 7. Zwischen der Lichtquelle und der Linse 7 ist in einem Brennpunktbereiche des Reflektors eine Blende 8 angeordnet, derart, dass das Lichtmodul 1 zur Bildung eines Abblendlichtes oder Fernlichtes genutzt werden kann.

Die Schwenkeinrichtung 2 ist derart ausgebildet, dass das Projektionsmodul 1 aus einer durch eine vertikale Längsmittelebene 9 definierten Nulllage entlang eines rechten Schwenkwinkelbereichs 10 einerseits und entlang eines linken Schwenkwinkelbereichs 11 andererseits verschwenkt werden kann.

Zur Begrenzung des rechten Schwenkwinkelbereiches 10 und des linken Schwenkwinkelbereiches 11 ist den Schwenkwinkelbereichen 10, 11 jeweils ein Endanschlag 12 zugeordnet, der verstellbar ausgebildet ist. Der Endanschlag 12 ist in einem unteren Bereich des Lichtmoduls 1 angeordnet und verläuft in einer Ebene, die senkrecht zur vertikalen Schwenkachse 3 steht. Der Endanschlag 12 ist als ein Schraubelement ausgebildet, das in einer Anschlagbohrung 13 mit dem Gehäuse 4 verbundenen Verstellrahmen 14 geführt gelagert.

Das Schraubelement 12 weist an einem ersten Ende einen Schraubkopf 15 auf, der unter Zuhilfenahme eines Werkzeugs um die Längsachse des Schraubelementes 12 verdrehbar ist. Die Anschlagbohrung 13 weist ein Innengewinde auf, so dass das Schraubelement 12 mit einem freien anderen Ende um einen vorgegebenen Schraubweg 16 außerhalb der Anschlagbohrung 13 bewegt werden kann. Das freie andere Ende des Schraubelementes 12 bildet eine Anschlagfläche 17, die bei Erreichen eines maximalen Schwenkwinkels 18 gegen ein Zahnsegment 19 des Gehäuses 4 anstößt. Im vorliegenden Ausführungsbeispiel ist der maximale Schwenkwinkel sowohl für den rechten Schwenkwinkelbereich 10 als auch für den linken Schwenkwinkelbereich 11 auf 16,5 ° eingestellt. Je tiefer das Schraubelement 12 in die Anschlagbohrung 13 eingeschraubt wird, desto kleiner ist der eingestellte maximale Schwenkwinkel 18.

Zur Einstellung eines vorgegebenen Schraubweges 16 bzw. des vorgegebenen maximalen Schwenkwinkels 18 kann das Schraubelement 12 mit einer Distanzscheibe 20 versehen sein, deren Dicke die Position der Anschlagfläche 17 bei eingeschraubtem Schraubelement 12 festlegt. Je größer die Dicke der Distanzscheibe 20 ist, desto größer ist der maximale Schwenkwinkel 18. Vorteilhaft kann somit durch Wahl von Distanzscheiben 20, deren Dicke zu maximalen Schwenkwinkeln 18 korrespondieren, auf einfache Weise ein rechter Schwenkwinkelbereich 10 und/oder ein linker Schwenkwinkelbereich 11 vorgegeben werden. Der maximale Schwenkwinkel 18 steht in einem umgekehrten Verhältnis zu dem Schraubweg 16 des Schraubelementes 12.

Alternativ kann das Schraubelement 12 auch über nicht dargestellte mechanische oder elektromechanische Verstellmittel bewegt-bzw. eingestellt werden. Die Verstellmittel können dabei in Abhängigkeit von elektrischen Sensoren betätigt werden.

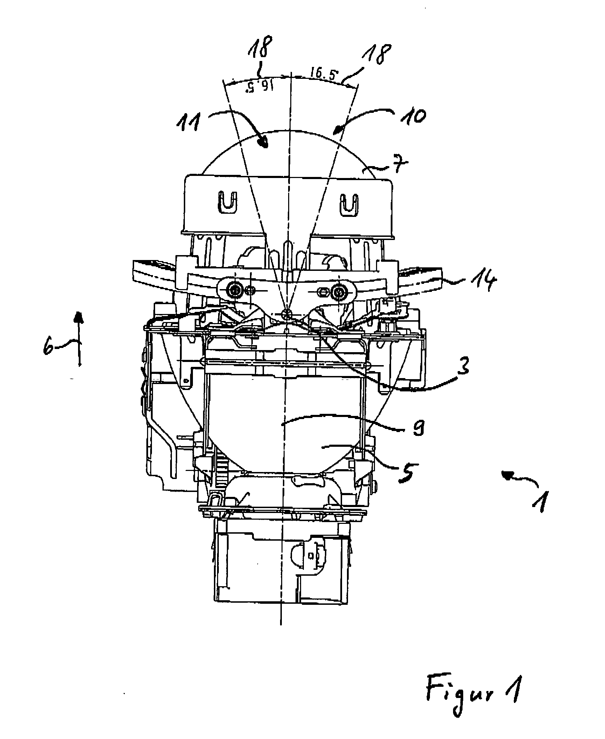

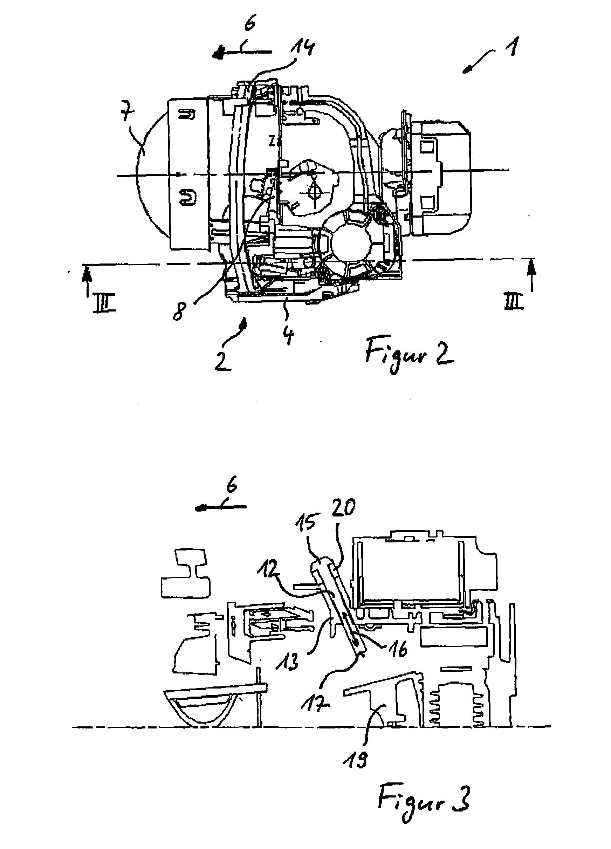

Wie auf Figur 1 und 2 ersichtlich ist, ist der Verstellrahmen 14, der die Aufnahme für die Anschlagbohrung 13 bildet, kreisförmig ausgebildet. Die Schwenkeinrichtung 2 ist in an sich bekannter Weise in dem unteren Bereich des Verstellrahmens 14 angeordnet.

## Patentansprüche

1. Scheinwerfer für Fahrzeuge mit einem das Licht abstrahlenden Lichtmodul, das mittels einer Schwenkeinrichtung über einen vorgegebenen Schwenkwinkelbereich im Verhältnis zu einem Gehäuse schwenkbar angeordnet ist, **dadurch gekennzeichnet, dass** der Schwenkwinkelbereich (10, 11) mittels eines verstellbaren Anschlags (12) einstellbar ist.

2. Scheinwerfer nach Anspruch 1, **dadurch gekennzeichnet, dass** der Endanschlag (12) als ein Schraubelement ausgebildet ist, das in einer senkrecht zur Schwenkachse (3) verlaufenden Anschlagbohrung (13) eines Verstellrahmens (14) verstellbar geführt ist.

3. Scheinwerfer nach Anspruch 1 oder 2, **dadurch gekennzeichnet, dass** der maximale Schwenkwinkel (18) durch den Schraubweg (16) des Schraubelementes (12) bestimmt wird

4. Scheinwerfer nach einem der Ansprüche 1 bis 3, **dadurch gekennzeichnet, dass** der maximale Schwenkwinkel (18) in einem umgekehrten Verhältnis zu dem Schraubweg (16) des Schraubelementes (12) steht.

5. Scheinwerfer nach einem der Ansprüche 1 bis 4, **dadurch gekennzeichnet, dass** das Schraubelement (12) manuell, mechanisch oder elektromechanisch betätigbar ausgebildet ist.

6. Scheinwerfer nach einem der Ansprüche 1 bis 5, **dadurch gekennzeichnet, dass** der Schraubweg (16) des Schraubelementes (12) durch unterschiedlich dicke Distanzscheiben (20) einstellbar ist, die dem Schraubelement (12) unterlegbar sind.

7. Scheinwerfer nach einem der Ansprüche 1 bis 5, **dadurch gekennzeichnet, dass** der Schraubweg (16) des Schraubelementes (12) durch eine elektrische Sensoreinrichtung einstellbar ist.

8. Scheinwerfer nach einem der Ansprüche 1 bis 7, **dadurch gekennzeichnet, dass** das Lichtmodul (1) um eine vertikale Schwenkachse (3) an dem Verstellrahmen (14) gelenkig gelagert ist.

9. Scheinwerfer nach einem der Ansprüche 1 bis 8, **dadurch gekennzeichnet, dass** der Verstellrahmen (14) kreisförmig ausgebildet ist und dass in einem unteren Bereich des Verstellrahmens (14) jeweils ein von der vertikalen Längsmittelebene (9) als Nullebene ausgehender rechter Schwenkwinkelbereich (10) und ein linker Schwenkwinkelbereich (11) verläuft, denen jeweils ein Endanschlag (12) zugeordnet sind.

10. Scheinwerfer nach einem der Ansprüche 1 bis 9, **dadurch gekennzeichnet, dass** das Lichtmodul (1) als Projektionsmodul ausgebildet ist, das eine Lichtquellen, einen Reflektor (5), eine in Lichtabstrahlrichtung (6) vorgelagerte Linse (7) und eine zwischen der Lichtquelle und der Linse (7) angeordnete Blende (8) aufweist.
